# EUROPEAN PATENT APPLICATION

(11) **EP 3 316 000 A1**
(43) Date of publication of application: **02.05.2018**
(21) Application number: 16196456.4
(22) Date of filing: 28.10.2016
(51) Int. Cl.: G01S 17/93, G01S 7/481, G01S 17/46

(54) **VEHICULAR SYSTEM FOR MEASURING A DISTANCE TO AN OBJECT AND METHOD OF INSTALLING SAME**

(71) Applicant: Xenomatix NV, 3001 Leuven (Heverlee) (BE)
(72) Inventor: Paesen, Rik, B-3590 Diepenbeek (BE)
(74) Representative: IPLodge bvba

(57) **Abstract**

The invention pertains to a system (100), in a vehicle (200) having a windshield (250), for measuring a distance to an object outside said vehicle (200). The system comprises: a light source (110) for projecting a light pattern in a first direction onto said object; a detector (120) for detecting at least a partial reflection of said light pattern, arriving from said object in a second direction; and processing means (130) configured to determine a position and/or a distance of said object on the basis of said detected reflection. It further comprises a transparent prism (140), shaped in such a way that it can be placed with a first side in contact with the windshield (250) and a second side directed to the light source (110) and the detector (120), whereby the second side presents a smaller angle of incidence towards the first and second direction than the windshield (250).

## Description

### Field of the Invention

The present invention pertains to the field of vehicular systems for determining a distance to an object in the vicinity or the path of a vehicle, including time-of-flight based sensing systems and triangulation-based sensing systems. The present invention also pertains to a method for installing such a system in a vehicle.

### Background

Vehicular distance measurement systems are known and used in applications such as park assist, active suspension systems, advanced driver assistance systems, and self-driving cars.

A specific type of detection system is disclosed in detail in international patent application publication no. WO 2015/004213 A1 in the name of the present applicant.

Another specific type of detection system is described for example in the unpublished international patent application no. PCT/EP2016/075589 in the name of the present applicant.

It is clear from both cited applications, that it is extremely important to detect the largest possible proportion of the reflected light at the detector of such a system, to obtain the desired operating range and accuracy. The known systems have not been deployed inside vehicles, because the necessary passage of projected and reflected light beams through the vehicle's windshield is believed to attenuate the light beams to such an extent that sufficiently accurate detection would no longer be possible.

Hence, there is a need for systems of the above mentioned type that can be deployed inside vehicles.

### Summary

According to an aspect of the present invention, there is provided a system, mountable in the interior of a vehicle having a windshield, the system being configured for measuring a distance to an object outside the vehicle, the system comprising: a light source for projecting a light pattern in a first direction onto the object; a detector for detecting at least a partial reflection of the light pattern, arriving from the object in a second direction; and processing means configured to determine a position and/or a distance of the object on the basis of the detected reflection; wherein the system further comprises a transparent prism which is shaped in such a way that it can be placed with a first side in contact with an inner surface of the windshield and a second side directed to the light source and the detector, whereby the second side presents a smaller angle of incidence towards the first direction and the second direction than the windshield.

The present invention is based *inter alia* on the insight of the inventor that the range and accuracy of a vehicular ranging system, mounted inside a vehicle, can be improved by reducing the attenuation caused by the repeated traversal of the air/glass interfaces by the light beams. The present invention is further based on the insight of the inventor that such a reduction in attenuation can be obtained by modifying the angle of incidence at the interior interface. It is an advantage of the present invention that the angle of incidence at the interior interface is reduced by the presence of a judiciously shaped and positioned prism that modifies the angle of incidence at the air/glass interface on the internal side. It should be noted that the terms "internal side" and "external side" are used herein to designate the inside and the outside of the vehicle, and not of the prism.

The term "transparent prism" is used herein to denote a transparent solid body having at least two sides, forming non-parallel material/air interfaces.

The prism may be made of glass or a transparent polymer (e.g. polycarbonate or polymethylmethacrylate). Glass is preferred because it has a refractive index that is close to that of the windshield and excellent mechanical properties for the purposes of the present invention.

In an embodiment of the system according to the present invention, the second side is substantially perpendicular to the first direction and the second direction.

It is an advantage of this embodiment that the angle of incidence at the internal side is reduced to the maximum extent.

In an embodiment of the system according to the present invention, a refractive index of the prism is in the range of 1.48 to 1.52.

It is an advantage of this embodiment that the refractive index of the prism is close to that of a typical windshield, thus approaching the desired situation where the windshield and the prism form an optical continuum.

In an embodiment, the system according to the present invention further comprises a layer of adhesive arranged on the first side for attaching the prism to the windshield, the layer of adhesive having a refractive index in the range of 1.48 to 1.52.

It is an advantage of this embodiment that the refractive index of the adhesive layer is close to that of a typical windshield, thus approaching the desired situation where the windshield and the adhesive layer form an optical continuum.

According to an aspect of the present invention, there is provided a vehicle comprising a system as described above, the vehicle having a windshield, the prism being arranged with the first side in contact with an inner surface of the windshield, and the light source and the detector being arranged such that their optical paths pass through the first side and the second side of the prism, the optical paths having a smaller angle of incidence onto the second side than onto the windshield.

In an embodiment of the vehicle according to the present invention, the windshield is provided with an anti-reflective coating, having a smaller refractive index than the windshield.

According to an aspect of the present invention, there is provided a method for installing a detection system in a vehicle having a windshield, the detection system comprising: a light source for projecting a light pattern in a first direction onto an object outside the vehicle; a detector for detecting at least a partial reflection of the light pattern, arriving from the object in a second direction; and processing means configured to determine a position and/or a distance of the object on the basis of the detected reflection; the method comprising: arranging a transparent prism with a first side in contact with an inner surface of a windshield of the vehicle; and arranging the light source and the detector such that their optical paths pass through the first side and the second side of the prism, whereby the second side presents a smaller angle of incidence towards the first direction and the second direction than the windshield.

In an embodiment of the method according to the present invention, the arranging of the transparent prism comprises providing a layer of adhesive on the first side for attaching the prism to the windshield, the layer of adhesive having a refractive index in the range of 1.48 to 1.52.

The technical effects and advantages of embodiments of the vehicle and the method according to the present invention correspond, *mutatis mutandis,* to those of the corresponding embodiments of the system according to the present invention.

### Brief Description of the Figures

These and other aspects and advantages of the present invention will now be described in more detail with reference to the accompanying drawings, in which:
- Figure 1 schematically illustrates a system according to an embodiment of the present invention;
- Figure 2 schematically clarifies a principle of operation of the present invention; and
- Figure 3 provides a flow chart of a method according to an embodiment of the present invention.

### Detailed Description of Embodiments

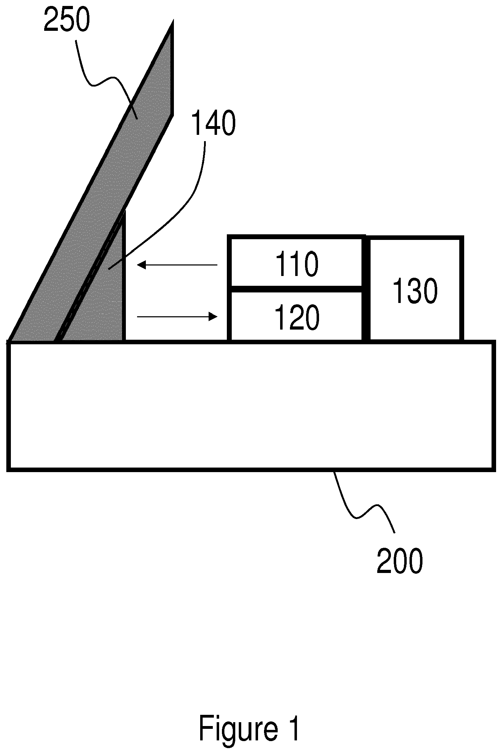

Figure 1 schematically illustrates a system **100** according to an embodiment of the present invention.

The system **100** is mountable in the interior of a vehicle **200** having a windshield **250,** and it is configured for measuring a distance to an object outside the vehicle **200;** in particular, the distance measurement is performed through the windshield **250.** The system **100** comprises a light source **110** for projecting a light pattern in a first direction onto the object, which may for example comprise a laser source arranged to project a pattern of spots (e.g., a VCSEL array, or a laser/grating combination). The system **100** further comprises a detector **120** for detecting at least a partial reflection of the light pattern, arriving from the object in a second direction, which may for example comprise a CMOS sensor array. The system **100** further comprises processing means **130** configured to determine a position and/or a distance of the object on the basis of the detected reflection. The processing means **130** may be implemented in dedicated hardware (e.g., ASIC), configurable hardware (e.g., FPGA), programmable components (e.g., a DSP or general purpose processor with appropriate software), or any combination thereof. The same component(s) may also include other functions.

The light source **110,** the detector **120,** and the processing means **130** may cooperate to obtain a distance measurement in a variety of ways that are known to the skilled person. Without limitation, the distance measurement may be obtained by analyzing in the processing means **130** the displacement of individual laser spots in a pattern projected by the light source **110** and detected by the detector **120,** as disclosed in detail in international patent application publication no. WO 2015/004213 A1 in the name of the present applicant. Still without limitation, the distance measurement may also be obtained by assessing in the processing means **130** the round-trip time-of-flight of a light (e.g., laser) pulse projected by the light source **110** and detected by the detector **120,** as described for example in the unpublished international patent application no. PCT/EP2016/075589 in the name of the present applicant. It is clear from both cited applications, that it is extremely important to detect the largest possible proportion of the reflected light at the detector **120.** The arrangements envisaged by the present invention have in common that the light is projected from inside the vehicle **200,** through the windshield **250,** onto a target scenery outside the vehicle **200,** and the reflections are again measured inside the vehicle **200** after passing once again through the windshield **250.** These systems may be used in automotive applications such as park assist, active suspension systems, advanced driver assistance systems, and self-driving cars.

The system **100** further comprises a transparent prism **140** which is shaped in such a way that it can be placed with a first side in contact with an inner surface of the windshield **250** and a second side directed to the light source **110** and the detector **120.** In other words, the transparent prim **140** is placed between the source/detector combination **110/120** and the windshield **250,** in the optical path of the projected and reflected light beams. The shape and the arrangement of the transparent prism **140** is such that its second side presents a smaller angle of incidence towards the first direction and the second direction than the windshield **250.** As a result, the projected and reflected beams pass through the prism/air interface at an angle that is closer to the perpendicular than the angle that they would present at the windshield/air interface in the absence of the prism. Accordingly, the beams undergo less refraction, and the amount of attenuation is reduced.

Thus, in a vehicle **200** equipped with the system **100** according to an embodiment of the present invention, the prism **140** is arranged with the first side in contact with an inner surface of the windshield **250,** and the light source **110** and the detector **120** are arranged such that their optical paths pass through the first side and the second side of the prism **140,** the optical paths having a smaller angle of incidence onto the second side than onto the windshield **250.** The windshield **250** may be provided with an anti-reflective coating **260,** having a smaller refractive index than the windshield. The refractive index and the thickness of the anti-reflective coating **260** may be selected by the skilled person to minimize the attenuation of a light beam having a given wavelength traversing the interface under a given angle.

Preferably, the second side - i.e. the side facing the source/detector combination **110/120 -** is substantially perpendicular to the first direction and the second direction, so as to minimize the refraction effects.

The refractive index of the prism **140** is preferably in the range of 1.48 to 1.52. To optimize the system, the refractive index of the prism **140** may be chosen as close as possible to the refractive index of the windshield **250,** to approach the situation where the combination of the windshield **250** and the prism **140** form an optical continuum.

A layer of adhesive **150** may be arranged on the first side for attaching the prism **140** to the windshield **250.** The layer of adhesive **150** preferably has a refractive index in the range of 1.48 to 1.52. To optimize the system, the refractive index of the adhesive **150** may be chosen as close as possible to the refractive index of the windshield **250,** to approach the situation where the combination of the windshield **250** and the adhesive **150** form an optical continuum.

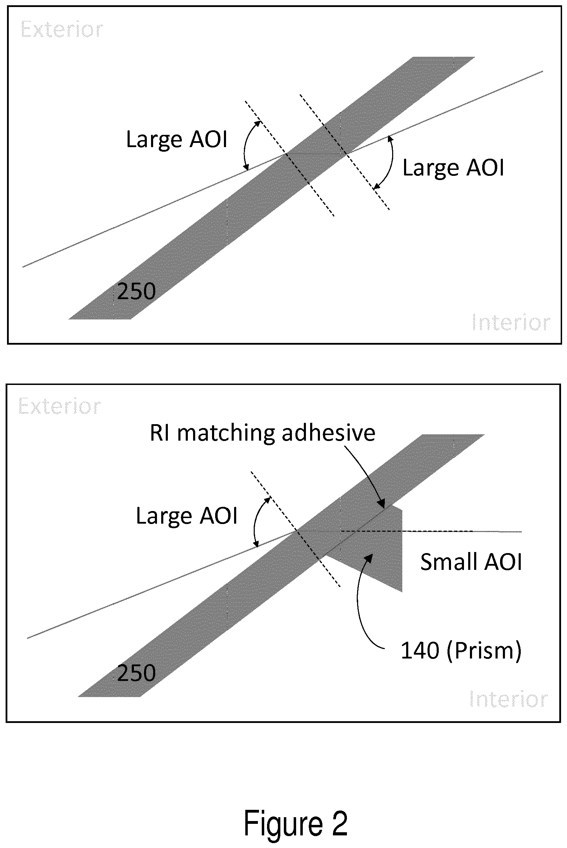

Figure 2 schematically clarifies a principle of operation of the present invention.

The top half of Figure 2 illustrates the situation of a light beam traversing the glass/air interfaces on the exterior side and the interior side of a windshield **250.** As the respective interfaces are parallel planes, and as the air on both sides has the same refractive index, identical angles of incidence can be observed on both sides. As the light typically travels to and from objects on the road in front of the vehicle, the angle of incidence on the exterior side will necessarily be very large - as a result, in this arrangement, the corresponding angle of incidence on the interior side will be equally large, which is undesirable.

Applying the Fresnel equations using standard values for the refractive indices of air (n = 1) and glass (n = 1.55), it may be calculated that the optical power of a light beam that travels a round-trip through the windshield (4 interface transitions) at angles of incidence of 65° will be reduced to 57%. At angles of incidence of 80°, the optical power of such a light beam will even be reduced to a mere 13%. Such a loss of optical power is detrimental to the range and accuracy of ranging systems as described above.

The bottom half of Figure 2 illustrates the situation of a light beam traversing the glass/air interfaces on the exterior side and the interior side of a windshield **250,** in the presence of a prism **140,** arranged in accordance with the present invention. The windshield/prism combination **250/140** is assumed to form an optical continuum. Hence, the respective interfaces traversed by the light beams are no longer parallel planes, such that different angles of incidence can be observed on both sides. By a judicious choice of the shape and arrangement of the prism **140,** the light that travels to and from objects on the road in front of the vehicle, is refracted in such a way that the angle of incidence on the interior side is small, preferably close to the perpendicular.

Applying the Fresnel equations again using the same values for the refractive indices of air (n = 1) and glass (n = 1.55), it may be calculated that the optical power of a light beam that travels a round-trip through the windshield (4 interface transitions) at angles of incidence of 65° (exterior) and 0° will be reduced to 69%. At angles of incidence of 80° (exterior) and 0° (interior), the optical power of such a light beam will be reduced to 33%. Hence, a much larger portion of the emitted light remains available for detection by the ranging systems thanks to the presence of the prism **140,** allowing a longer detection range and higher accuracy.

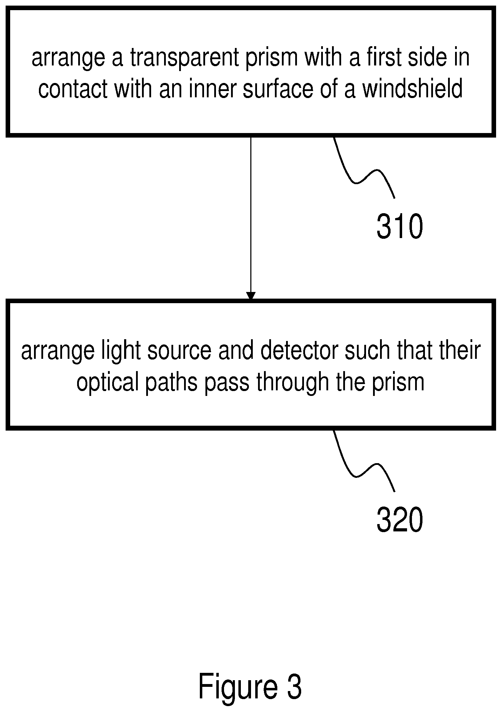

Figure 3 provides a flow chart of a method according to an embodiment of the present invention. While the steps of the method are illustrated as consecutive steps, this is done for clarification purposes only, and the illustrated order is not limiting. For consistency, reference numbers relating to elements illustrated in Figure 1 will also be included in the following description. Details and options of the system disclosed hereinabove in the context of Figure 1 apply to the following description as well, and will not be repeated.

The purpose and effect of the illustrated method is to install a detection system **100** in a vehicle **200** having a windshield **250.** The detection system **100** comprises a light source **110** for projecting a light pattern in a first direction onto an object outside the vehicle **200,** a detector **120** for detecting at least a partial reflection of the light pattern, arriving from the object in a second direction; and processing means **130** configured to determine a position and/or a distance of the object on the basis of the detected reflection. The method comprises arranging **310** a transparent prism **140** with a first side in contact with an inner surface of a windshield **250** of the vehicle **200,** and arranging **320** the light source **110** and the detector **120** such that their optical paths pass through the first side and the second side of the prism **140.** This is done in such a way that the second side of the prism **140** presents a smaller angle of incidence towards the first direction and the second direction than the windshield **250.**

The arranging **310** of the transparent prism **140** may comprise providing a layer of adhesive **150** on the first side for attaching the prism to the windshield **250,** the layer of adhesive **150** having a refractive index in the range of 1.48 to 1.52.

While the invention has been described hereinabove with reference to separate system and method embodiments, this was done for clarifying purposes only. The skilled person will appreciate that features described in connection with the system or the method alone, can also be applied to the method or the system, respectively, with the same technical effects and advantages. Furthermore, the scope of the invention is not limited to these embodiments, but is defined by the accompanying claims.

## Claims

1. A system (100), mountable in the interior of a vehicle (200) having a windshield (250), the system (100) being configured for measuring a distance to an object outside said vehicle (200), said system comprising:
- a light source (110) for projecting a light pattern in a first direction onto said object;
- a detector (120) for detecting at least a partial reflection of said light pattern, arriving from said object in a second direction; and
- processing means (130) configured to determine a position and/or a distance of said object on the basis of said detected reflection;
**characterized in that** said system (100) further comprises a transparent prism (140) which is shaped in such a way that it can be placed with a first side in contact with an inner surface of said windshield (250) and a second side directed to said light source (110) and said detector (120), whereby said second side presents a smaller angle of incidence towards said first direction and said second direction than said windshield (250).

2. The system (100) according to claim 1, whereby said second side is substantially perpendicular to said first direction and said second direction.

3. The system (100) according to claim 1 or claim 2, wherein a refractive index of said prism (140) is in the range of 1.48 to 1.52.

4. The system (100) according to any of the preceding claims, further comprising a layer of adhesive (150) arranged on said first side for attaching said prism (140) to said windshield (250), said layer of adhesive (150) having a refractive index in the range of 1.48 to 1.52.

5. A vehicle (200) comprising a system (100) according to any of the preceding claims, said vehicle (200) having a windshield (250), said prism (140) being arranged with said first side in contact with an inner surface of said windshield (250), and said light source (110) and said detector (120) being arranged such that their optical paths pass through said first side and said second side of said prism (140), said optical paths having a smaller angle of incidence onto said second side than onto said windshield (250).

6. The vehicle (200) according to claim 5, wherein said windshield (250) is provided with an anti-reflective coating (260), having a smaller refractive index than said windshield.

7. A method for installing a detection system (100) in a vehicle (200) having a windshield (250), said detection system (100) comprising:
- a light source (110) for projecting a light pattern in a first direction onto an object outside said vehicle (200);
- a detector (120) for detecting at least a partial reflection of said light pattern, arriving from said object in a second direction; and
- processing means (130) configured to determine a position and/or a distance of said object on the basis of said detected reflection;
said method comprising:
- arranging (310) a transparent prism (140) with a first side in contact with an inner surface of a windshield of said vehicle; and
- arranging (320) said light source (110) and said detector (120) such that their optical paths pass through said first side and said second side of said prism (140),
whereby said second side presents a smaller angle of incidence towards said first direction and said second direction than said windshield (250).

8. The method according to claim 7, wherein said arranging (310) of said transparent prism (140) comprises providing a layer of adhesive (150) on said first side for attaching said prism to said windshield (250), said layer of adhesive (150) having a refractive index in the range of 1.48 to 1.52.
